# EUROPÄISCHE PATENTANMELDUNG

(11) **EP 1 223 125 A2**
(43) Veröffentlichungstag der Anmeldung: **17.07.2002**
(21) Anmeldenummer: 01130586.9
(22) Anmeldetag: 21.12.2001
(51) Int. Cl.: B65G 53/66

(54) **Vorrichtung zum Einstellen einer vorgegebenen Gasmenge zum pneumatischen Fördern von Schüttgut**

(30) Priorität: 29.12.2000 DE 10065687
(71) Anmelder: Motan-Fuller Verfahrenstechnik GmbH, 88250 Weingarten (DE)
(72) Erfinder: Heep, Michael, 88250 Weingarten (DE); Heep, Dieter, 88368 Bergatreute (DE); Winkhardt, Guido, 88326 Aulendorf (DE)
(74) Vertreter: Riebling, Peter, Dr.-Ing.

(57) **Zusammenfassung**

Verfahren und Vorrichtung zur pneumatischen Förderung von Schüttgut in Dichtstromförderanlagen mit Dosiervorrichtungen für das Schüttgut, Dosiervorrichtungen für die Förderluft, u.a. bestehend aus Druckluftzuleitung, Druckminderer (9), ev. Verzweigung (36), Magnetventil (1), Lavaldüsen (3) und weiterführender Luftleitung (2). Der Förderdruck in der stromabwärts angeordneten Luftleitung treibt als Führungsgröße ein Stellglied (5) an, das einen vorgewählten künstlichen Druckverlust vor einer Lavaldüse mit festgesetztem Querschnitt in der Grundstellung durch steigenden Förderdruck proportional verändert. Dadurch wird eine Regelung des die Lavaldüse durchströmenden Volumenstromes erreicht, ohne dass die Lavaldüse selbst geregelt werden muss.

## Beschreibung

Die Erfindung betrifft ein Verfahren und eine Vorrichtung zur pneumatischen Förderung von Schüttgut nach dem Oberbegriff der Ansprüche 1 und 9. Vorrichtungen dieser Art werden benutzt, um die Gasmenge von Pfropfen- bzw. Dichtstromförderungen im Verhältnis zum eingespeisten Schüttgutmassenstrom, insbesondere Kunststoffgranulat, konstant zu halten.

Das in der DE 41 00 205 beschriebenen Luftmengenventil wurde inzwischen von Weiterentwicklungen abgelöst. Dieser Bereich wird aktuell nach dem Stand der Technik von den Kugelhähnen nach der DE 43 28 626, über verstellbare Ringquerschnitt-Lavaldüsen der US 5,813,801 und elektronisch gesteuerte Einheitsregler mit online-Blendenmessungen, den sogenannten AQUs, abgedeckt.

Diese haben ihre Berechtigung für komplexe Aufgabenstellungen, wenn verschiedene Produktsorten über unterschiedliche Förderwege gefördert werden müssen und für jede Aufgabe der optimale Betriebspunkt ermittelt werden muss. Zwangsläufig benötigen diese Systeme einen erheblichen Steuerungsaufwand und sind für die einfachen Anwendungen zu teuer.

Nach wie vor werden dafür die in der DE 41 00 205 als nachteilig beschriebene Mehrfachanordnung von fixen Lavaldüsen verwendet, von denen mindestens zwei eine treppenartige Leckluftmengenkompensation zulassen. Auch hier erfolgt die Umschaltung durch das elektrische Signal eines Kontaktmanometers.

Weiterhin ist aus der EP 05 99 173 B1 eine Lavaldüse bekannt geworden, die mit Hilfe des Förderdruckes und eines Membran-Stellantriebes die Kontur der Lavaldüse verschiebt und somit an der engsten Stelle der Kontur den rechteckigen oder höchstens langlochförmigen Querschnitt, gegenüber einer optimalen kreisrunden Düse, zur Luftmengenveränderung verstellt.

W. Siegel beschreibt in seinem Buch "Pneumatische Förderung" die Möglichkeit, handelsübliche Druckminderer vor der Lavaldüse mittels Ansteuerung durch den Förderdruck auf den Membranantrieb im Ausgangswert anzuheben. Leider passen die genormten Federn in der Kennlinie nicht zu den unterschiedlichen zellenradgrößenabhängigen Leckluftkurven, außerdem wird häufig aus Kostengründen nur ein einziger, festeingestellter Druckminderer mit Gewinde-Federverstellung ohne Membranantrieb für mehrere Lavaldüsen verwendet, der deshalb keinesfalls verstellt werden darf.

Der Erfindung liegt daher die **Aufgabe** zugrunde, ein **Verfahren** und eine **Vorrichtung** zu beschreiben, die weniger aufwendig sind als der STAND DER TECHNIK, die ohne größeren elektrischen Steuerungsaufwand auskommen und die von ihrer Ausbildung her zusätzlich die Justierung auf den optimalen Betriebspunkt zulassen.

Die Aufgabe wird durch die technischen Lehren der Ansprüche 1 und 9 gelöst.

Wesentliches Merkmal der Erfindung ist, dass der Förderdruck als Führungsgröße einen federrückgestellten Pneumatikzylinder betreibt, der einen vorgewählten künstlichen Druckverlust vor einer fixen Lavaldüse in der Grundstellung durch steigenden Förderdruck proportional aufhebt.

Da bekanntlich Lavaldüsen mit Diffusor bei konstantem Vordruck p1 und nicht verändertem Querschnitt eine konstante Gasmenge liefern, solange das Verhältnis p Förderdruck dividiert durch p1 nicht größer als 0,9 wird [[p_{F} / p₁] ≤ 0,9], kann die Gasmenge ab p1 = 1 bar durch Veränderung des Druckes vor der Düse entsprechend eingestellt werden. Erzeugt man also nach einem fest auf den maximalen Druckverlust p1 max. eingestellten Druckminderer einen künstlichen Druckverlust der sich automatisch zum ansteigenden Förderdruck proportional verringert, so erzielt man eine für die Leckluftkompensation notwendige, steigende Gasmenge bis der künstliche Druckverlust gleich 0 ist, und p1 max. an der Düse anliegt.

### Beispiel:

Bei einer Lavaldüse mit einem Durchmesser von 15 mm ergibt sich bei einem am Druckminderer fest eingestellten Vordruck p1 max. von 3 bar eine Gasmenge von 510 Normcbm pro Stunde. Erzeugt man zwischen dem Druckminderer und der Düse einen künstlichen Druckverlust von 2 bar, so ergibt sich ein verbleibender Restdruck von 1 bar vor der Düse und damit eine verminderte Gasmenge von 260 Normcbm pro Stunde. Senkt man den künstlichen Druckverlust auf 1 bar, so steigt die Gasmenge durch den jetzt auf 2 bar angestiegenen Druck vor der Düse auf 385 Normcbm pro Stunde. Damit ist eine Gasmengenregelung über eine einfache Druckverlusterzeugung möglich, ohne das Lavaldüsenquerschnitte geändert werden müssen, oder der handelsübliche Druckminderer verstellt werden muss.

Wesentliches Merkmal der Erfindung ist also, dass man stromaufwärts in einem Förderzweig eine Lavaldüse anordnet, die fest eingestellt ist und deren Querschnitt in sich nicht veränderbar ist.

Vor dieser Lavaldüse wird nun erfindungsgemäss ein Stellglied angeordnet, das mit seinem Stellorgan in den Luftstrom vor der Lavaldüse eingreift und dort einen Druckverlust verursacht.

Dieses Stellglied ist bevorzugt selbstregelnd, kann jedoch auch über eine reine Ein-Aus-Steuerung betätigt werden. Die Stellgliedregleung kann pneumatisch oder elektrisch erfolgen.

In einer bevorzugten Ausführungsform der vorliegenden Erfindung ist es vorgesehen, dass die Auf-Zu- Funktion und die Regelfunktion zusammen in ein und dem selben Gleid verwirklicht sind. Diese Anordnung bringt zusätzlich weitere Vorteile gegenüber der bereits verbesserten Regelung im Vergleich zum Stand der Technik.

Es hat sich nämlich erstaunlicherweise auch herausgestellt, daß man den gleichen Druckverlusteffekt in der Gasströmung vor der Lavaldüse erzielen kann,wenn man anstatt des einfachen Magnetventils mit Auf- Zu-Funktion, ein Stellventil installiert.

Dieses Ventil kann außer der Auf-Zu-Funktion verschiedene Mittelstellungswerte, vorgegeben von 4-20 Milliampere des Stellsignals, einnehmen, die eine Luftmengenregelung in der bereits beschriebenen Weise zulassen.
Der Vorteil liegt in der Zusammenfassung von AUF-ZU und geregelter Durchströmungsöf fnung, welche in Abhängigkeit vom Stellwert am Stellventil eingegeben werden kann. Da die Ausführung des Stellventils diese Programmiermöglichkeit beinhaltet, genügt eine einfache Speisespannung mit EIN-AUS-Funktion, eine seperate elektrische Steuerung ist nicht erforderlich! Das Stellsignal wird in Abhängigkeit vorn Förderdruck nach der Lavaldüse durch den Drucktransmitter vorgegeben.

Letztendlich bestimmt somit der Förderdruck die Stellung des Stellventiles und damit den Druck vor der Düsenöffnung.

Durch die Anordnung dieses Stellgliedes im Zwischenraum in der Luftleitung zwischen einem fest eingestellten Druckminderer und einer fest eingestellten Lavaldüse ergibt sich der wesentliche Vorteil dass durch den eingebrachten Druckverlust der Druck vor der Düse absinkt und sich hierdurch physikalisch bedingt ergibt, dass der Volumenstrom stromabwärts der Lavaldüse absinkt, was gewünscht ist.

Es ergibt sich als Ergebnis eine verblüffend einfache Regelung des Volumenstroms in der Förderleitung und es bedarf keinerlei aufwendiger Regelungseingriffe an Verstellblenden an der Lavaldüse selbst.

Die EP 0 599 173 B1 lehrt bspw. eine komplizierte Verstellung des Düsenquerschnittes der Lavaldüse. Hierdurch werden die Herstellungskosten und auch die Unterhaltskosten sehr stark erhöht. Dies vermeidet die Erfindung, indem sie einen fest eingestellten Diffusor und eine unveränderbare Lavaldüse verwendet und lediglich stromaufwärts der Lavaldüse ein Stellglied anordnet.

Selbstverständlich kann dieses Stellglied in verschiedenen Weise in den Luftstrom vor der Lavaldüse eingreifen, um einen beabsichtigen Druckverlust hervorzurufen.

In einer ersten bevorzugten Ausführungsform ist es vorgesehen, dass das Stellglied mit einer federbelasteten Ventilnadel in eine Regelkammer eingreift, die direkt mit dem Anschluss vor der Lavaldüse angeordnet ist.

Die Regelung des Hubes der Ventilnadel in der Regelkammer erfolgt hierbei entgegen einer Kraft einer Feder, welche die Ventilnadel in ihre Schließstellung in die Regelkammer hineinbringen will entgegen der Kraft eines pneumatisch gesteuerten Kolbens in einem Zylinder, welcher Zylinderraum von dem Druck in der Förderleitung versorgt wird.

Damit wird also eine selbsttätige Regelung der Stellung der Ventilnadel in Abhängigkeit des sich ändernden Förderdrucks beschrieben.

Selbstverständlich kann ein derartiges geregeltes Stellglied auch entfallen und es wird nur vorgesehen, dass die Ventilnadel in bspw. ein oder zwei verschiedenen Hubstellungen in die Regelkammer eingreift, um dort einen gewünschten Druckverlust zu erzeugen.

Neben der Erzeugung eines Druckverlustes durch eine radial zur Förderleitung heb- und senkbaren angeordneten Ventilnadel gibt es selbstverständlich eine Reihe von weiteren Möglichkeiten, ein derartiges Stellglied zu verwirklichen.

Bspw. sind Drehklappen bekannt, die über einen entsprechenden Drehmotor angesteuert werden.

Anstatt einer radial verstellbaren Ventilnadel kann das Stellglied auch so angeordnet werden, dass die Ventilnadel in axialer Richtung (parallel zur Förderrichtung der Förderluft) in die Regelkammer eingreift und ebenfalls hierdurch den gewünschten Druckverlust erzeugt.

Wichtig ist, dass die Querschnittsverminderung in der Regelkammer vor der Lavaldüse nie kleiner eingestellt wird als der Querschnitt der Lavaldüse selbst. Hieraus ergibt sich, dass die Lavaldüse selbst nicht geregelt wird, sondern nur deren eingangsseitig anliegender Luftdruck.

Aus Vereinfachungsgründen ist es vorgesehen, dass die hier beschriebene Anordnung doppelt vorhanden ist, nämlich aus zwei zueinander parallelen Zweigen besteht, nämlich einem Förderzweig und einem Freiblaszweig.
Es ist hierbei vorgesehen, dass entweder in beiden Zweigen die beschriebene Lavaldüse mit dem Stellglied vorhanden ist oder dass die genannten Anordnung nur lediglich in einem der beiden Zweige vorhanden ist.

Es gibt also insgesamt drei Möglichkeiten, nämlich die Anordnung von Lavaldüse und zugeordnetem Stellglied sowohl in dem Förderzweig als auch in dem Freiblaszweig; die Anordnung von Lavaldüse und Stellglied nur in dem Freiblaszweig und/oder die Anordnung von Lavaldüse und Stellglied nur in dem Förderzweig.

Der Erfindungsgegenstand der vorliegenden Erfindung ergibt sich nicht nur aus dem Gegenstand der einzelnen Patentansprüche, sondern auch aus der Kombination der einzelnen Patentansprüche untereinander.

Alle in den Unterlagen, einschließlich der Zusammenfassung, offenbarten Angaben und Merkmale, insbesondere die in den Zeichnungen dargestellte räumliche Ausbildung werden als erfindungswesentlich beansprucht, soweit sie einzeln oder in Kombination gegenüber dem Stand der Technik neu sind.

Im folgenden wird die Erfindung anhand von mehrere Ausführungswege darstellenden Zeichnungen näher erläutert. Hierbei gehen aus den Zeichnungen und ihrer Beschreibung weitere erfindungswesentliche Merkmale und Vorteile der Erfindung hervor.

Es zeigen:
- Figur 1:: Schematisiert eine Ansicht der Anordnung nach der Erfindung
- Figur 2:: Eine ergänzte und erweiterte Anordnung im Vergleich zur Figur 1
- Figur 3:: Eine gegenüber Figur 2 geänderte zweite Ausführungsform
- Figur 4:: Eine gegenüber Figur 2 geänderte dritte Ausführungsform
- Figur 5:: Schnitt durch die erfindungsgemässe Lavaldüse mit Stellglied
- Figur 6:: Schematisiert ein Schnitt durch die Regelkammer mit Darstellung der Ventilnadel
- Figur 7:: Schnitt durch die Regelkammer nach Figur 6 mit Darstellung einer anderen Ausführungsform
- Figur 8:: Das Volumenstrom-Förderdruck-Diagramm mit Darstellung der Veränderung des Förderdruckes in Abhängigkeit von der Stellung der Ventilnadel bei zwei verschiedenen Druckmindereinstellungen
- Figur 9:: Die kinematische Umkehrung der Kurve nach Figur 9 mit einer Ausführung bei welcher der Kolben des Stellgliedes durch den Förderdruck in die Regelkammer eingeschoben wird.
- Figur 10:: Eine bevorzugte Ausführungsform eines Regelventiles mit zusätzlich integrierter Auf- Zu-Funktion im Steuer- bzw. Reglekreis der Druckluftversorgung

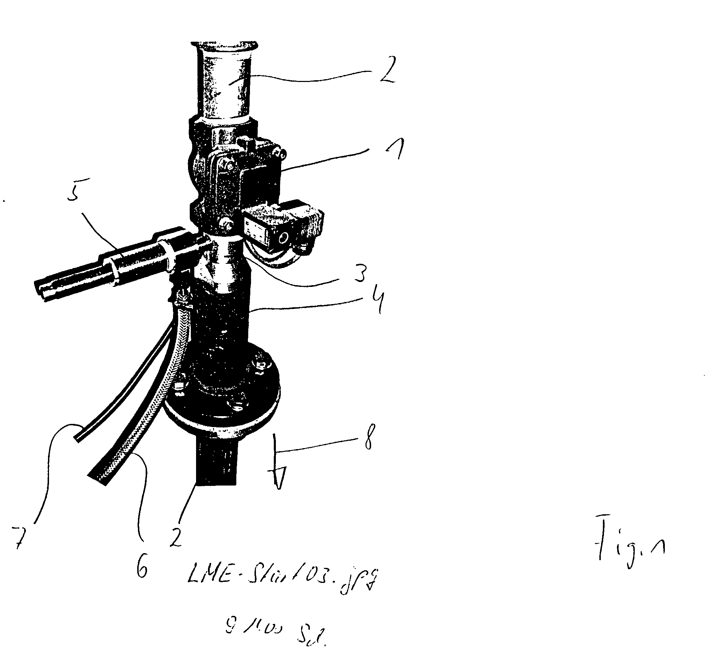

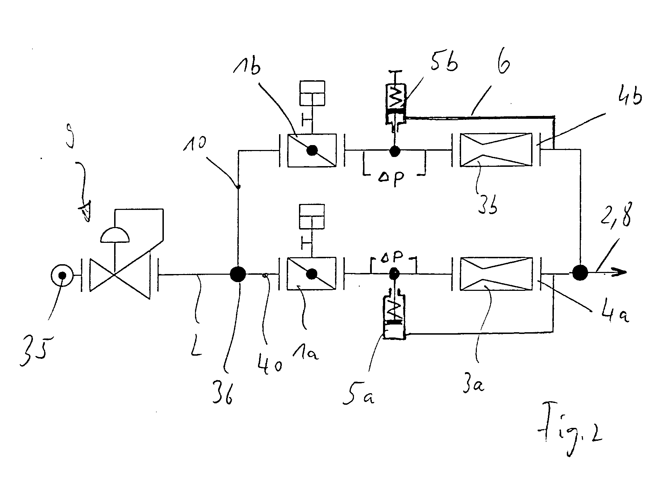

In **Figur 1** ist allgemein ein Aufbau der vorliegenden Erfindung dargestellt, Es wird gezeigt, dass an einer Luftleitung 2 ein Magnetventil 1 angeordnet ist, an welches eine Lavaldüse 3 mit nachfolgendem Diffusor 4 anschließt. Es wird darauf hingewiesen, dass jeweils bei Vorhandensein von zwei Zweigen 10, 40 gemäss **Figur 2** diese Anordnung auch doppelt vorhanden ist, nämlich in Form der Magnetventile 1a, 1b mit nachfolgend angeordneten, obigen Bauteilen.

Das Magnetventil 1 sitzt nun, in der Anordnung nach Figur 1, vor der Lavaldüse 3, die sich in den Diffusor 4 öffnet, der wiederum über einen Flansch in Flussrichtung 8 in die Luftleitung 2 weiter einläuft.

Das Stellglied 5 sitzt gemäss Figur 1 vor der Lavaldüse 3 und wird von einer Luftleitung 6 versorgt, die auch in den Figuren 2 bis 4 dargestellt ist.

Die dargestellte Stromleitung 7 gehört zu den Magnetventilen 1a, 1b, für die Ausführungsform mit 2 parallelen Anordnungen. Damit wird der Öffnungs- und Schließzustand der einzelnen Magnetventile voreingestellt. Je nach Einstellung der Magnetventile 1a, 1b wird entweder nur der Förderzweig 10 beaufschlagt oder nur der Freiblaszweig 40.

Gemäss den **Figuren 2 bis 4** ist von einem Druckluftnetz 35 abzweigend ein fest eingestellter Druckminderer 9 vorhanden, der den Druck von einem hohen Netzdruck auf einen niedrigeren Vordruck einstellt.

Bspw. erfolgt eine derartige Minderung von einem Netzdruck aus der anlagenseitigen Versorgungsleitung von 10 bar auf einen Vordruck in der Luftleitung 2 von 3 bar.

An der Verzweigung 36 trennt sich diese in zwei Zeige auf, nämlich den Förderzweig 10 und den Freiblaszweig 40.

Im Förderzweig 10 ist das Magnetventil 1b angeordnet, und hinter dem Magnetventil 1b ist nun das erfindungsgemässe Stellglied 5b angeordnet, das vor der Lavaldüse 3b sitzt, die ihrerseits fest mit dem Diffusor 4b verbunden ist.

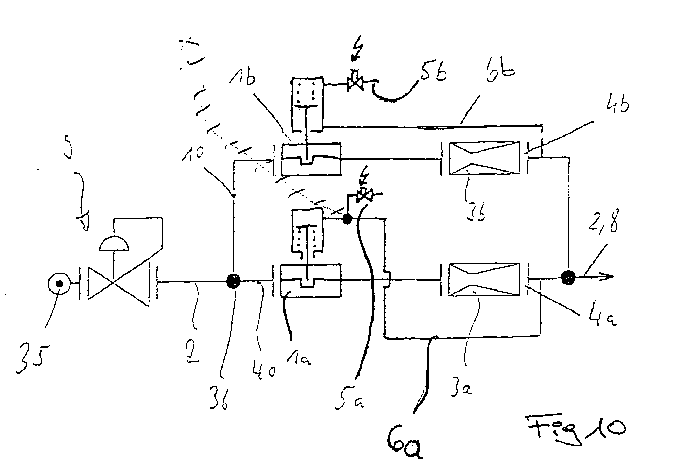

In einer bevorzugten Ausführungsform der Erfindung ist es nun vorgesehen, das Magnetventil 1b und das erfindungsgemässe Stellglied 5b in einem Regelventil zusammenzufassen, und somit eine kombinierte Regeleinheit mit integrierter Ein-Ausfunktion im Steuer- bzw. Regelkreis der Druckluftversorgung anzuordnen. Siehe dazu auch Fig. 10.

Durch die kombinierte Funktion in einer einzigen Einheit ist die Regelung des Luftdrucks mit einem relativ geringen Aufwand möglich. Die Regelung kann selbstverständlich auch in der kombinierten Ausführungsform auf pneumatischem oder elektrischen/elektronischem Wege erfolgen.

Dadurch, dass man den gleichen Druckverlusteffekt in der Gasströmung vor der Lavaldüse erzielen kann, wenn man anstatt des einfachen Magnetventils mit Auf-Zu-Funktion, ein Stellventil mit integrierter Funktion eines Magnetveniles installiert, erzielt man den Vorteil, dass die Regelung über den gesamten Bereich recht einfach erfolgen kann.

Das Stellventil ist nun so konzipiert, dass es entsprechend programmiert werden kann, und zum Betrieb lediglich mit einer einfachen Speisespannung versorgt werden muß. So kann mittels eines herkömmlichen Stromreglers dieses Ventil außer der Auf-Zu-Funktion verschiedene Mittelstellungswerte einnehmen, die durch Stromstärken des Stellsignals, von beispielsweise 4-20 Milliampere, entsprechend des Druckbedarfs vorgegeben werden. Somit wird die Luftmengenregelung noch einfacher.

Der Vorteil dieser bevorzugten Ausführungsform liegt nun in der Zusammenfassung von AUF-ZU-Funktion und geregelter Durchströmungsöf fnung, welche in Abhängigkeit vom Stellwert am Stellventil eingegeben werden kann. Das Stellsignal wird in Abhängigkeit vorn Förderdruck nach der Lavaldüse durch den Drucktransmitter vorgegeben.

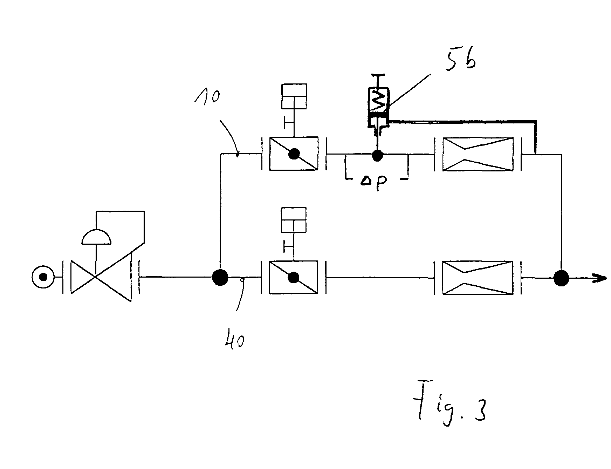

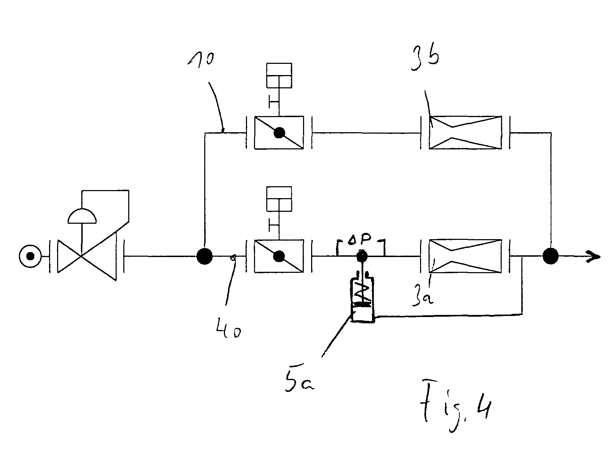

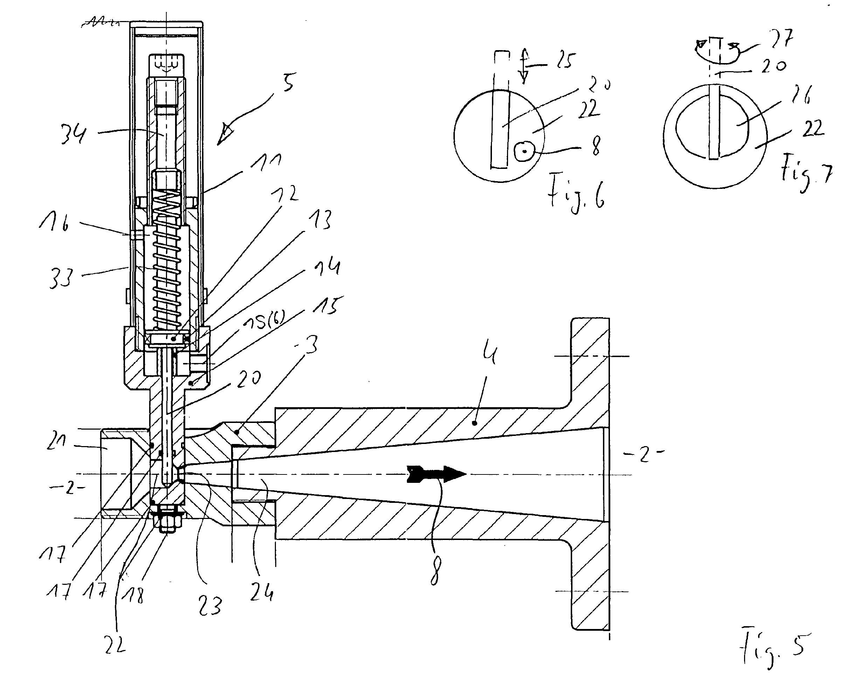

Die Zeichnung nach Figur 2 zeigt, dass die Stellung des Kolbens 12 (siehe auch Figur 5) im Stellglied 5 von der Feder 33 in dessen Zylinder und der in der Leitung 6 zugeführten Druckluft bestimmt wird, so dass der Kolben 12 gegen die Feder 33 in Figur 5 arbeitet.

Daher wird bei steigendem Gasdruck stromabwärts des Diffusors 4b der Kolben 12 gegen die Feder 33 verschoben und die am Kolben 12 befestigte Ventilnadel 20 aus der Regelkammer 22 herausgehoben, wodurch der Druckverlust vor der Lavaldüse 3b vermindert wird.

Ist der Freiblaszweig 40 in Betrieb, so gelten sinngemäß die gleichen Erläuterungen, nur mit dem Unterschied, dass gemäss Figur 2 der Kolben bei steigendem Gasdruck die Ventilnadel 20 in die Regelkammer 22 einbringt und einen ansteigenden Druckverlust verursacht.

Sinn dieser Maßnahme ist, dass eine schonende Entleerung der Förderleitung bewerkstelligt wird. Beim Beginn des Freiblasens ist die Förderleitung gefüllt und es entsteht ein hoher Gegendruck bei relativ geringer Luftfördermenge. Gelingt nun das Freiblasen der gefüllten Förderleitung dann entsteht hierdurch ein Druckabfall in der Leitung 6a und die hier dargestellte Regelung im Freiblaszweig 40 erhöht die Luftmenge in der Förderleitung bis zur maximalen Durchflussleistung und damit bis zum absoluten Freiblasen der Rohrleitung. Diese Ausführungsform mit einem geregelten Freiblaszweig 40 findet speziell bei empfindlichem Schüttgut Anwendung, da durch die Regelung im Freiblaszweig 40 in Gegenüberstellung mit einem ungeregelten Freiblaszweig 40, siehe Figur 3, eine Temperaturüberhöhung für das pfropfende Schüttgut auf Grund großer Reibungsgeschwindigkeiten im Wesentlichen vermieden werden kann.

**Figur 3** zeigt eine gegenüber Figur 2 abgewandelte Ausführungsform bei der lediglich erkennbar ist, dass im Förderzweig 10 das erfindungsgemässe Stellglied 5b vorhanden ist, während diese im Freiblaszweig 40 entfällt.

Hier wird also gezeigt, dass auch eine Regelung im Freiblaszweig 40 entfallen kann und das Freiblasen dann mit großer Luftmenge erfolgt.

**Figur 4** zeigt die Umkehrung, bei der erkennbar ist, dass die erfindungsgemäße Regelung der Lavaldüse 3b entfällt und die Lavaldüse 3b mit einem festen Wert arbeitet, während die Lavaldüse 3a im Freiblaszweig 40 mit der erfindungsgemässen Regelung ausgerüstet ist.

Aus **Figur 5** gehen weitere Einzelheiten der erfindungsgemässen Lavaldüse mit dem daran ansetzendem Stellglied 5 hervor.

Das Stellglied 5 besteht im wesentlichen aus einem Gehäuse 11, in dem der Kolben 12 verschiebbar gegen die Kraft einer Feder 33 durch die Wirkung einer Luft im Zylinderraum verschoben wird.

Die Federkraft ist hierbei durch eine Einstellschraube 34 einstellbar.

Über den Förderdruckanschluss 19 setzt die vorher beschriebene Leitung 6a oder 6b, je nach dem welcher Zweig betrachtet wird, an, die daher die Druckluft unmittelbar stromabwärts des Diffusors 4 entnimmt.

Der Kolben 12 ist mit einer Ventilnadel 20 verbunden und die Ventilnadel ist abdichtend in einer Führungsbuchse 14 im Ventilkörper 15 geführt.

Der Ventilkörper ist über mehrere O-Ring-Abdichtungen 17 in einer Regelkammer 22 verschiebbar angeordnet, wobei die Regelkammer 22 vor der Düsenbohrung 23 einer Lavaldüse 3 angeordnet ist.

Die Regelkammer ist hierbei Teil eines Ventilgehäuses, welches einlassseitig eine relativ große Eingangsöffnung 21 aufweist, die luftschlüssig mit der Luftleitung 2 verbunden ist.

Diese Eingangsöffnung 21 vermindert sich auf einen geringeren Durchmesser der Regelkammer 22, die sich wiederum stromabwärts auf den Querschnitt der Düsenbohrung 23 der Lavaldüse 3 vermindert.

Wichtig ist aber, dass der Querschnitt der Regelkammer 22 größer ist als der Querschnitt der Düsenbohrung 23.

Wenn sich die Ventilnadel 20 in der Schließstellung befindet und voll in die Regelkammer 22 eingreift ist der freie Querschnitt der Regelkammer 22 immer noch größer als die Düsenbohrung 23 der Lavaldüse. Damit wird klargestellt, dass die Lavaldüse 3 selbst keiner Regelungen ihres Querschnittes bedarf.

Es können also herkömmliche kostengünstige Lavaldüsen verwendet werden, die marktüblich sind und es bedarf keiner komplizierten Regelungen, weil die Regelung selbst durch ein einfaches hier beschriebenes Stellglied 5 vorgenommen wird.

Die Lavaldüse 3 ist mit dem Diffusor 4 verbunden, durch den die Luft in Flussrichtung 4 wiederum in die Luftleitung 2 einströmt.

Die Auslassseite der Lavaldüse 3 mündet in den Diffusorkanal 24 des Diffusors 4.

Dieser Diffusorkanal 24 erweitert sich konisch in Pfeilrichtung 8 auf den Durchmesser der Luftleitung 2.

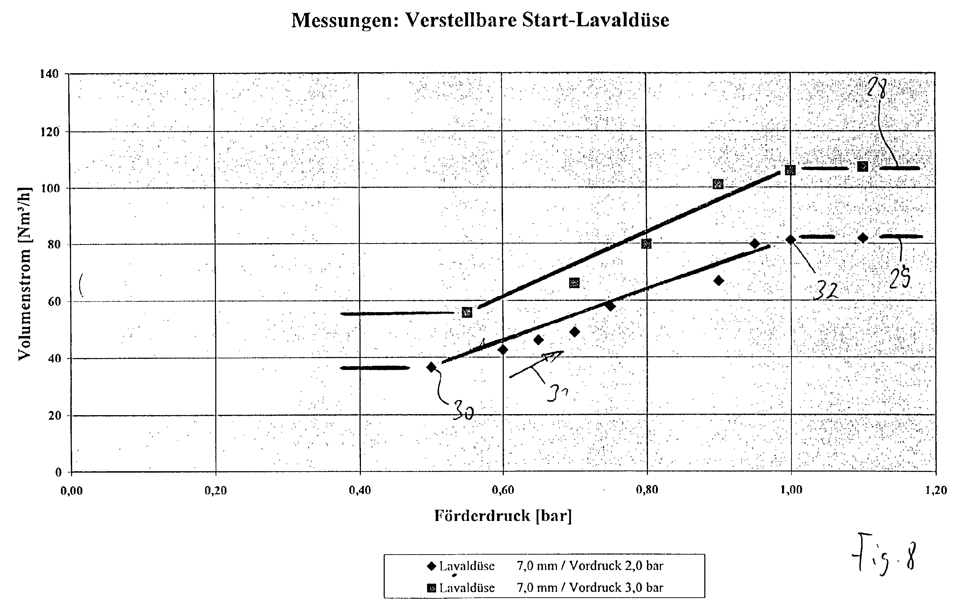

Die **Figur 6** zeigt schematisiert das Eindringen der Ventilnadel 20 in den lichten Querschnitt der Regelkammer 22, wobei die Düsen die Ventilnadel 20 in den Pfeilrichtungen 25 heb- und senkbar durch das vorher beschriebene Stellglied angetrieben ist.

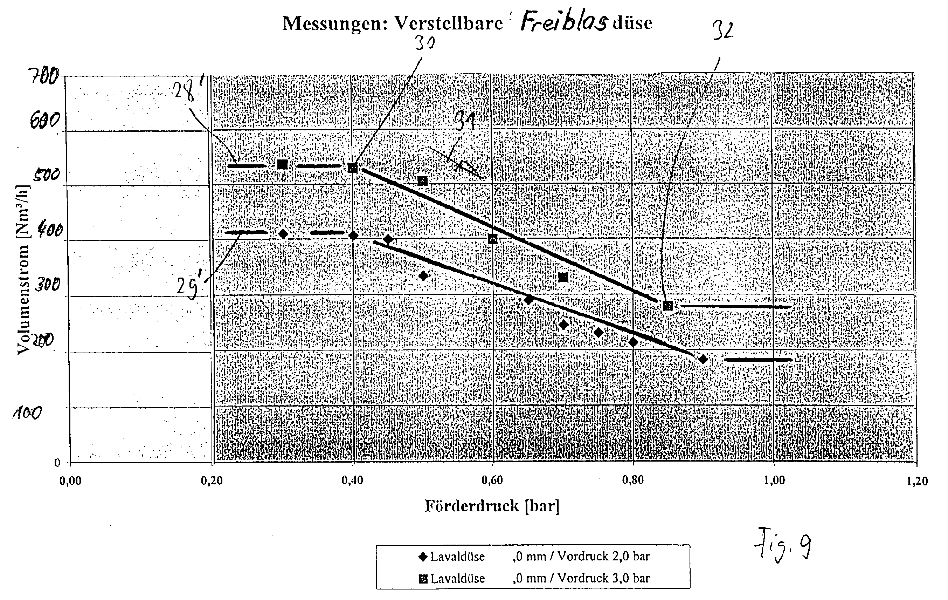

Die **Figur 7** zeigt eine Abwandlung dieser Ausführungsform bei der erkennbar ist, dass eine Drehklappe 26 vorhanden ist, die in den Pfeilrichtungen 27 drehbar angetrieben ist und ebenfalls so einen beabsichtigen Druckverlust in der Regelkammer 22 verursacht.

Die **Figuren 8 und 9** zeigen jeweils das Volumenstrom-Förderdruck-Diagramm, wobei der Volumenstrom in der Luftleitung 2 auf der Ordinate dargestellt ist, während auf der Abszisse der Förderdruck in der Luftleitung 2 dargestellt ist, der über die Leitung 6 auch auf die eine Seite des Kolbens 12 aufgebracht wird.

Es sind zwei Volumenstromkurven 28, 29 dargestellt, wobei die Volumenstromkurve 28 eine Lavaldüse mit 7,0 mm Düsenquerschnitt und einem Vordruck von 3.0 bar zeigt (bezogen auf den Druck des Druckminderers) während die andere Volumenstromkurve 29 die gleiche Lavaldüse mit einem Vordruck von 2 bar am Druckminderer 9 darstellt.

Bei Position 30 ist die Ventilnadel 20 vollständig in die Regelkammer eingefahren und erzeugt so den höchsten Druckverlust.

Mit zunehmendem Herausziehen der Ventilnadel 20 in Pfeilrichtung 25 nach oben in Figur 6 verringert sich der Druckverlust vor der Lavaldüse, wodurch der Volumenstrom zunimmt und die Volumenstromkurve 28, 29 in Pfeilrichtung 31 ansteigt. Bei Position 32 ist die Ventilnadel vollständig aus der Regelkammer entfernt, so dass der durch den Druckminderer 9 fest eingestellte Vordruck in vollem Umfang auf die Lavaldüse 3 wirkt und diese die maximale Luftmenge abgibt.

Eine kinematische Umkehrung der Förderstromkurven 28 und 29 ist mittels der Förderstromkurven 28' und 29' in Figur 9 dargestellt.

Hier ist lediglich dargestellt, dass bei Position 30 die Ventilnadel vollständig aus der Regelkammer 22 entfernt ist und mit zunehmendem Einfahren der Ventilnadel in die Regelkammer der Druckverlust größer wird und das Fördervolumen fällt, bis bei Position 32 die Ventilnadel vollständig eingefallen ist.

Die Feder dient bei beiden Ausführungsbeispielen nach Figuren 8 und 9 als Rückstellglied für die Ventilnadel, die von ihrer gegenüberliegenden Seite (Kolben 12) von dem Druck beaufschlagt wird.

Über die Auswahl der Federkennlinie der Feder 33 wird damit der Regelbereich der Lavaldüse bestimmt.

Die Figur 10 zeigt, wie bereits weiter oben ausgeführt, eine bevorzugte Ausführungsform der vorliegenden Erfindung, dahingehend, dass das Magnetventil 1 und das Stellglied 5 in einem Gehäuse zusammengefaßt sind. Die Ansteuerung kann dabei sowohl elektrisch als auch pneumatisch erfolgen. Auch eine kombinierte Signalaufbereitung ist selbstverständlich möglich. Die Funktionsweise des integrierten Reglers entspricht denen der einzelnen Bauelemente.

Mit den vorbeschriebenen konstruktiven Lösungen wird also eine sehr kostengünstige geregelte Lavaldüse vorgeschlagen, die in ihren Herstellungskosten und in ihren Unterhaltskosten weit unter Lavaldüsen liegt, deren Querschnitt über komplizierte Regelglieder verändert wird.

**Zusammenfassend** wird nochmals angeführt, dass hier ein Verfahren und eine Vorrichtung zur pneumatischen Förderung von Schüttgut in Dichtstromförderanlagen beschrieben wird, welche mit Dosiervorrichtungen für das Schüttgut, Dosiervorrichtungen für die Förderluft, u.a. bestehend aus Druckluftzuleitung, Druckminderer, ev. Verzweigung, Magnetventil, Lavaldüsen und weiterführender Luftleitung ausgestattet sind. Sie zeichnen sich dadurch aus, dass der Förderdruck in der stromabwärts angeordneten Förder- oder Luftleitung (2) als Führungsgröße ein Stellglied (5) antreibt, das einen vorgewählten künstlichen Druckverlust vor einer Lavaldüse (3) mit festgesetztem Querschnitt in der Grundstellung durch steigenden Förderdruck proportional verändert.

Dem Verfahren liegt zu Grunde, dass der Förderdruck in der stromabwärts angeordneten Luftleitung (2) als Führungsgröße einen federrückgestellten Pneumatikzylinder (5) antreibt, der einen vorgewählten künstlichen Druckverlust vor der Lavaldüse (3) mit festgesetztem Querschnitt in der Grundstellung durch steigenden Förderdruck proportional verändert. Ebenfalls wird mittels des Stellgliedes (5), welches zwischen dem auf einen festen Wert eingestellten Druckminderer (9) und der Lavaldüse (3) angeordnet ist, der stromabwärts der Lavaldüse (3) fließende Volumenstrom durch verändern des Luftdrucks vor der Lavaldüse (3) reguliert. Die Luftzufuhr für die stromabwärts angeordnete Luftleitung (2) erfolgt über einen Förderzweig (10) für die zur Schüttgutförderung benötigte Druckluft, zu welchem von einer dem Druckminderer (9) nachfolgenden Verzweigung abgehend parallel ein Freiblaszweig (40) angeordnet ist, der für zusätzliche Druckluftzufuhr zur Vermeidung bzw. Behebung von Flussstörungen in der Förderleitung vorgesehen ist. Der Förderzweig (10) wird wenigstens in einer speziellen Ausführungsform mit einem der Lavaldüse (3) vorgeschaltetem Stellglied (5) geregelt. Für den Freiblaszweig (40) gilt das gleiche. In einer weiteren Ausführungsform werden sowohl der Förderzweig (10) als auch der Freiblaszweig (40) mit einem der Lavaldüse (3) vorgeschaltetem Stellglied (5) geregelt. Es ist gewährleistet, dass wenn die Ventilnadel (20) des Stellgliedes (5) sich in der Schließstellung befindet und voll in die Regelkammer (22) eingreift der freie Querschnitt der Regelkammer (22) immer noch größer ist als die Düsenbohrung (23) der Lavaldüse (3).

Dies gilt selbstverständlich auch für die Vorrichtung zur Durchführung eines Verfahrens zur pneumatischen Förderung von Schüttgut, bei der zur Regelung des für die Schüttgutförderung erforderlichen, die Lavaldüse durchströmenden Druckluftstromes am Einlass der Lavaldüse (3) ein Stellglied (5) angeordnet ist, welches in Abhängigkeit des in der stromabwärts angeordneten Luftleitung (2) herrschenden Luftdrucks geregelt wird. Der Luftdruck vor der Lavaldüse (3) wird durch verändern des wirksamen Querschnittes in der Druckluftzuführung geregelt. Die Änderung des wirksamen Querschnittes erfolgt mittels einer Regelkammer (22) die vor der Lavaldüse (3) angeordnet ist, wobei der wirksame Querschnitt der Regelkammer (22) vor der Lavaldüse (3) immer größer ist als der Eingangsquerschnitt der Lavaldüse (3).

die Lavaldüse (3) mündet in einen Diffusor (4) der in Flussrichtung (8) des Druckluftstromes eine gleichmäßige Querschnittsaufweitung bis zur weiterführenden Luftleitung (2) hin bewirkt. Der wirksame Querschnitt der Regelkammer (22) vor der Lavaldüse (3) wird bei sinkendem Druck in der stromabwärts angeordneten Förderleitung (2) verändert. Je nach Anwendungsfall wird er verringert oder bis zum maximal möglichen Druck erhöht, der dem Druck der Druckreglers entspricht. Die Führungsgröße für das Stellglied (5) zur Regelung des Luftdrucks am Eingang der Lavaldüse (3) wird nach dem Diffusor (4) abgenommen. Eine Leitung (6) ist zur Rückführung des Luftdrucks an das Stellglied (5) für die Regelung des Luftdrucks am Eingang der Lavaldüse (3) nach dem Diffusor (4) angeschlossen. Das Stellglied (5) zur Luftdruckregelung am Einlass der Lavaldüse (3) weist eine axial und/oder radial verstellbare Vorrichtung (20) auf.

### Zeichnungslegende

- 1.: Magnetventil 1a, 1b
- 2.: Luftleitung
- 3.: Lavaldüse
- 4.: Diffusor 4a, 4b
- 5.: Stellglied 5a, 5b
- 6.: Leitung 6a, 6b
- 7.: Stromleitung
- 8.: Flussrichtung
- 9.: Druckminderer
- 10.: Förderzweig
- 11.: Gehäuse
- 12.: Kolben
- 13.: Dichtung
- 14.: Führungsbuchse
- 15.: Ventilkörper
- 16.: Entlüftungsöffnung
- 17.: O-Ring-Abdichtung
- 18.: Spannmutter
- 19.: Förderdruckanschluss
- 20.: Ventilnadel
- 21.: Eingangsöffnung
- 22.: Regelkammer
- 23.: Düsenbohrung
- 24.: Diffusorkanal
- 25.: Pfeilrichtungen
- 26.: Drehklappe
- 27.: Pfeilrichtungen
- 28.: Volumenstromkurve
- 29.: Volumenstromkurve
- 30.: Position
- 31.: Pfeilrichtung
- 32.: Position
- 33.: Feder
- 34.: Einstellschraube
- 35.: Druckluftnetz
- 36.: Verzweigung
- 37. 38. 39. 40.: Freiblaszweig

## Patentansprüche

1. **Verfahren** zur pneumatischen Förderung von Schüttgut in Pfropfen- bzw. Dichtstromförderanlagen mit Dosiervorrichtungen für das Schüttgut, Dosiervorrichtungen für die Förderluft, u.a. bestehend aus Druckluftzuleitung, Druckminderer, ev. Verzweigung, Magnetventil, Lavaldüsen und weiterführender Luftleitung, **dadurch gekennzeichnet, dass** der Förderdruck in der stromabwärts angeordneten Luftleitung (2) als Führungsgröße ein Stellglied (5) antreibt, das einen vorgewählten künstlichen Druckverlust vor einer Lavaldüse (3) mit festgesetztem Querschnitt in der Grundstellung durch steigenden Förderdruck verändert.

2. **Verfahren** nach Anspruch 1, **dadurch gekennzeichnet, dass** der Förderdruck in der stromabwärts angeordneten Luftleitung (2) als Führungsgröße einen federrückgestellten Pneumatikzylinder (5) antreibt, der einen vorgewählten künstlichen Druckverlust vor der Lavaldüse (3) mit festgesetztem Querschnitt in der Grundstellung durch steigenden Förderdruck verändert.

3. **Verfahren** nach Anspruch 1 oder 2, **dadurch gekennzeichnet, dass** mittels des Stellgliedes (5), welches zwischen dem auf einen festen Wert eingestellten Druckminderer (9) und der Lavaldüse (3) angeordnet ist, der stromabwärts der Lavaldüse (3) fließende Volumenstrom durch verändern des Luftdrucks vor der Lavaldüse (3) reguliert werden kann.

4. **Verfahren** nach Anspruch 1, 2 oder 3,**dadurch gekennzeichnet, dass** die Luftzufuhr für die stromabwärts angeordnete Luftleitung (2) über einen Förderzweig (10) für die zur Schüttgutförderung benötigte Druckluft erfolgt, zu welchem von einer dem Druckminderer (9) nachfolgenden Verzweigung (36) abgehend parallel ein Freiblaszweig (40) angeordnet ist, der ebenfalls in die stromabwärts angeordnete Luftleitung (2) mündet und für zusätzliche Druckluftzufuhr zur Vermeidung bzw. Behebung von Flussstörungen in der Förderleitung vorgesehen ist.

5. **Verfahren** nach einem der Ansprüche 1 bis 4, **dadurch gekennzeichnet, dass** der Förderzweig (10) mit einem der Lavaldüse (3) vorgeschalteten Stellglied (5) geregelt wird.

6. **Verfahren** nach einem der Ansprüche 1 bis 4, **dadurch gekennzeichnet, dass** der Freiblaszweig (40) mit einem der Lavaldüse (3) vorgeschalteten Stellglied (5) geregelt wird.

7. **Verfahren** nach einem der Ansprüche 1 bis 6, **dadurch gekennzeichnet, dass** sowohl der Förderzweig (10) als auch der Freiblaszweig (40) mit einem der Lavaldüse (3) vorgeschalteten Stellglied (5) geregelt wird.

8. **Verfahren** nach einem der Ansprüche 1 bis 7, **dadurch gekennzeichnet, dass**, gewährleistet ist, dass wenn die Ventilnadel (20) des Stellgliedes (5) sich in der Schließstellung befindet und voll in die Regelkammer (22) eingreift der freie Querschnitt der Regelkammer (22) immer noch größer ist als die Düsenbohrung (23) der Lavaldüse (3).

9. **Vorrichtung zur Durchführung eines Verfahrens** zur pneumatischen Förderung von Schüttgut in Pfropfen- bzw. Dichtstromförderanlagen mit Dosiervorrichtungen für das Schüttgut, Dosiervorrichtungen für die Förderluft, u.a. bestehend aus Druckluftzuleitung, Druckminderer, ev. Verzweigung, Magnetventil, Lavaldüsen und weiterführender Luftleitung, **dadurch gekennzeichnet, dass** zur Regelung des für die Schüttgutförderung erforderlichen, die Lavaldüse durchströmenden Druckluftstromes am Einlass der Lavaldüse (3) ein Stellglied (5) angeordnet ist, welches in Abhängigkeit des in der stromabwärts angeordneten Luftleitung (2) herrschenden Luftdrucks geregelt wird.

10. **Vorrichtung** nach Anspruch 9, **dadurch gekennzeichnet, dass** der Luftdruck vor der Lavaldüse (3) durch verändern des wirksamen Querschnittes in der Druckluftzuführung geregelt wird.

11. **Vorrichtung** nach Anspruch 9 oder 10, **dadurch gekennzeichnet, dass** zur Änderung des wirksamen Querschnittes eine Regelkammer (22) vor der Lavaldüse (3) angeordnet ist.

12. **Vorrichtung** nach Anspruch 9, 10 oder 11, **dadurch gekennzeichnet, dass** der wirksame Querschnitt der Regelkammer (22) vor der Lavaldüse (3) immer größer ist als der Eingangsquerschnitt der Lavaldüse (3).

13. **Vorrichtung** nach einem der Ansprüche 9 bis 12, **dadurch gekennzeichnet, dass** die Lavaldüse (3) in einen Diffusor (4) mündet der in Flussrichtung (8) des Druckluftstromes eine gleichmäßige Querschnittsaufweitung bis zur weiterführenden Luftleitung (2) hin bewirkt.

14. **Vorrichtung** nach einem der Ansprüche 9 bis 13, **dadurch gekennzeichnet, dass** der wirksame Querschnitt der Regelkammer (22) vor der Lavaldüse (3) bei sinkendem Druck in der stromabwärts angeordneten Förderleitung (2) erhöht wird.

15. **Vorrichtung** nach einem der Ansprüche 9 bis 14, **dadurch gekennzeichnet, dass** der wirksame Querschnitt der Regelkammer (22) vor der Lavaldüse (3) bei sinkendem Druck in der stromabwärts angeordneten Luftleitung (2) verringert wird.

16. **Vorrichtung** nach einem der Ansprüche 9 bis 15, **dadurch gekennzeichnet, dass** die Führungsgröße für das Stellglied (5) zur Regelung des Luftdrucks am Eingang der Lavaldüse (3) nach dem Diffusor (4) abgenommen wird.

17. **Vorrichtung** nach einem der Ansprüche 9 bis 16, **dadurch gekennzeichnet, dass** eine Leitung (6) zur Rückführung des Luftdrucks an das Stellglied (5) für die Regelung des Luftdrucks am Eingang der Lavaldüse (3) nach dem Diffusor (4) angeschlossen ist.

18. **Vorrichtung** nach einem der Ansprüche 9 bis 17, **dadurch gekennzeichnet, dass** das Stellglied (5) zur Luftdruckregelung am Einlass der Lavaldüse (3) eine axial verstellbare Vorrichtung (20) aufweist.

19. **Vorrichtung** nach einem der Ansprüche 9 bis 18, **dadurch gekennzeichnet, dass** das Stellglied (5) zur Luftdruckregelung am Einlass der Lavaldüse (3) eine radial verstellbare Vorrichtung aufweist.

20. **Vorrichtung** nach einem der Ansprüche 9 bis 19, **dadurch gekennzeichnet, dass** das Stellglied (5) zur Luftdruckregelung am Einlass der Lavaldüse (3) eine Rückstellvorrichtung aufweist.

21. **Vorrichtung** nach einem der Ansprüche 9 bis 20, **dadurch gekennzeichnet, dass** die Vorrichtung für die Luftzufuhr für eine Förderleitung (2) aus zwei zueinander parallelen Zweigen, dem Förderzweig (10) und dem Freiblaszweig (40) besteht.

22. **Vorrichtung** nach einem der Ansprüche 9 bis 21, **dadurch gekennzeichnet, dass** in einem der beiden Zweige (10 oder 40) zusätzlich zur Lavaldüse (3) ein Stellglied (5) vorhanden ist.

23. **Vorrichtung** nach einem der Ansprüche 9 bis 22, **dadurch gekennzeichnet, dass** in beiden Zweigen (10, 40) zusätzlich zur Lavaldüse (3) ein Stellglied (5) vorhanden ist.

24. **Vorrichtung** nach einem der Ansprüche 9 bis 23, **dadurch gekennzeichnet, dass** das Stellglied (5) zusammen mit dem Magnetventil (1) in einem gemeinsamen Bauteil untergebracht ist.

25. **Vorrichtung** nach einem der Ansprüche 9 bis 24, **dadurch gekennzeichnet, dass** dem Stellglied (5) ein Programmodul für dessen Regelfunktion zugeordnet ist, so dass dieses zum Betrieb lediglich mit Speisespannung versorgt werden muß.

26. **Vorrichtung** nach einem der Ansprüche 9 bis 25, **dadurch gekennzeichnet, dass** das Stellglied (5) mittels eines Stromwertes geregelt wird.
